(19) Europäisches Patentamt
European Patent Office
Office européen des brevets

(11) Veröffentlichungsnummer: **0 197 418**
**B1**

# (12) EUROPÄISCHE PATENTSCHRIFT

(45) Veröffentlichungstag der Patentschrift: **01.03.89**

(51) Int. Cl.⁴: **C09B 62/507**, C09B 62/026, D06P 1/38

(21) Anmeldenummer: **86104039.2**

(22) Anmeldetag: **24.03.86**

(54) **Azoreaktivfarbstoffe.**

(30) Priorität: **04.04.85 DE 3512340**

(43) Veröffentlichungstag der Anmeldung: **15.10.86 Patentblatt 86/42**

(45) Bekanntmachung des Hinweises auf die Patenterteilung: **01.03.89 Patentblatt 89/9**

(84) Benannte Vertragsstaaten: **CH DE FR GB LI**

(56) Entgegenhaltungen:
**EP-A- 0 181 585**
**EP-A- 0 182 173**
**US-A- 3 531 459**
**US-A- 4 035 351**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk(DE)**

(72) Erfinder: **Herd, Karl Josef, Dr., Am Gartenfeld 66, D-5068 Odenthal(DE)**

EP 0 197 418 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Gegenstand der vorliegenden Erfindung sind Farbstoffe der Formel

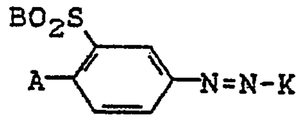

worin
A = NHR, NR R, SR, SOR, $SO_2R$, Cl insbesondere $SO_2B$,
B = $-CH=CH_2$ oder $-CH_2CH_2-Z$ worin
Z = alkalisch eliminierbarer Rest oder OH
R = Substituent, insbesondere gegebenenfalls substituiertes $C_1$–$C_6$-Alkyl, Aralkyl, Aryl, Alkenyl oder Hetaryl, wobei die beiden Reste R zusammen auch für die restlichen Glieder eines gegebenenfalls weitere Heteroatome aufweisenden 5- oder 6-Ringsystems stehen können, insbesondere für

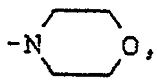 , 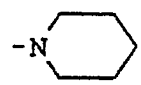 , 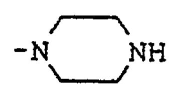

K = Rest einer Kupplungskomponente der Hydroxybenzol-, Hydroxynaphthalin-, Hydroxy-amino-naphthalin-, Aminobenzol-, Acetessigarylidreihe oder der aromatisch-heterocyclischen Reihe, mit Ausnahme solcher Farbstoffe in denen A = $SO_2B$ und gleichzeitig K = Kupplungskomponente der Aminobenzol-, Pyrazolon-, Aminopyrazol- oder Pyridonreihe ist, sowie deren Verwendung zum Färben und Bedrucken von natürlichen und synthetischen Fasermaterialien.

Geeignete Kupplungskomponenten sind insbesondere solche der Hydroxybenzol-, Hydroxynaphthalin-, Aminobenzol-, der aromatisch-heterocyclischen Reihe oder der Acetessigacrylidreihe, wobei diese übliche Substituenten aufweisen können, beispielsweise Arylazogruppen und insbesondere auch Reaktivgruppen. Substituenten in den Benzol-, Naphthalin- oder aromatisch-heterocyclischen Ringen der Kupplungskomponenten sind beispielsweise Alkyl, Alkoxy, Halogen, OH, Amino, Alkylamino, Arylamino, Acrylamino wie Alkylcarbonylamino, Alkylsulfonylamino, Acrylcarbonylamino, insbesondere gegebenenfalls substituiertes Phenylcarbonylamino, Carboxy, Sulfoalkyl.

Bevorzugte Kupplungskomponenten sind insbesondere auch solche, die frei von wasserlöslich-machenden Resten sind, und wie sie beispielsweise in der DE-OS 2 362 683 beschrieben sind.

Geeignete Reste Z sind beispielsweise $-OSO_3H$, $-SSO_3H$, $-OCOCH_3$, $-OPO_3H_2$, $-OSO_2CH_3$, $-S-CN$, $-NHSO_2CH_3$, Cl, Br, F, $-N(CH_3)_2$, $-N(C_2H_5)_2$, $OCOC_6H_5$, $-OSO_2-C_6H_5-CH_3$, $-N(CH_3)_3]^+X^-$ oder

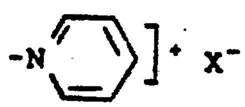 , 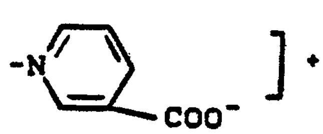

(X = Halogen oder Sulfat).

Geeignete Reaktivgruppen, d.h. Gruppen, die mit den OH- oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, bzw. an einen Monoazin-, Diazin-, Triazin-, z.B. Pyridin-, Pyrimidin-, Pyridazin-, Pyrazin-, Thiazin-, Oxazin oder asymmetrischen oder symmetrischen Triazinring, oder an ein derartiges Ringsystem, welches einen oder mehrere ankondensierte aromatisch-carbocyclische Ringe aufweist, wie ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen:
Halogen (Cl, Br oder F), Ammonium einschließlich Hydrazinium, Sulfonium, Sulfonyl, Azido($-N_3$), Rhodanido, Thio, Thiolether, Oxiether, Sulfinsäure und Sulfonsäure.

Im einzelnen sind beispielsweise zu nennen:
2,4-Difluortriazinyl-, 2,4-Dichlortriazinyl-6-, Monohalogen-sym.-triazinylreste, insbesondere Monochlor und Monofluortriazinylreste, die durch Alkyl, Aryl, Amino, Monoalkylamino, Dialkylamino, Aralkylamino, Arylamino, Alkoxy, Aryloxy, Alkylthio, Arylthio substituiert sind, wobei Alkyl vorzugsweise gegebenenfalls substituiertes $C_1$–$C_4$-Alkyl, Aralkyl vorzugsweise gegebenenfalls substituiertes Phenyl-$C_1$–$C_4$-alkyl und Aryl vorzugsweise gegebenenfalls substituiertes Phenyl oder Naphthyl bedeutet und wobei bevorzugte Substituenten für Alkyl Hydroxy, Cyan, $C_1$–$C_4$-Alkoxy, Carboxy, Sulfo oder Sulfato

sind und für Phenyl und Naphthyl Sulfo, $C_1$–$C_4$-Alkyl, $C_1$–$C_4$-Alkoxy, Carboxy, Halogen oder Acylamino.

Im einzelnen seien folgende Reste genannt:

2-Amino-4-fluor-triazinyl-6, 2-Methylamino-4-fluor-triazinyl-6, 2-Ethylamino-4-fluortriazinyl-6, 2-Isopropylamino-4-fluor-triazinyl-6, 2-Dimethylamino-4-fluor-triazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6-, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-β-Cyanethylamino-4-fluor-triazinyl-6, 2-Benzoylamino-4-fluor-triazinyl-6, 2-β-Phenylethylamino-4-fluor-triazinyl-6, 2-Benzyl-methylamino-4-fluor-triazinyl-6, 2-(x-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(2'-Carboxy-4-sulfophenyl)-amino-4-fluor-triazinyl-6, 2-(6'-Sulfonaphthyl-(2')-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-β-Hydroxyethylphenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m- oder p-Sulfophenoxy)-4-fluor-triazinyl-6, 2-(o-, m- oder p-Methyl- oder -Methoxy-phenoxy-4-fluor-triazinyl-6, 2-β-Hydroxyethylmercapto-4-fluor-triazinyl-6, 2-Phenyl-mercapto-4-fluor-triazinyl-6, 2-(4'-Methylphenyl)-mercapto-4-fluortriazinyl, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-Reste und die aus den entsprechenden Halogenatomen mit tertiären Basen wie Trimethylamin, Triethylamin, Dimethyl-β-hydroxyethylamin, Triethanolamin, N,N-Dimethylhydrazin, Pyridin, α- oder γ-Picolin, Nicotinsäure oder Isonicotinsäure oder Sulfinaten, insbesondere Benzolsulfinsäure erhältlichen Reste.

Mono-, Di- oder Trihalogenpyrimidinylreste, wie 2,4-Dichlorpyrimidinyl-6-, 2,3,5-Trichlorpyrimidinyl-6-, 2,4-Dichlor-5-nitro- oder -5-methyl- oder -5-carboxymethyl-oder -5-carboxy- oder -5-cyano- oder -5-vinyl- oder -5-sulfo- oder -5-mono- -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl- oder carbonyl-, β-(4',5'-Dichlorpyridazon-6'-yl-1')-ethylcarbonyl-, N-Methyl-N-(2,3-dichlorchinoxalin-6-sulfonyl)-acetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocylischen Reste, unter diesen beispielsweise 2-Fluor-4-pyrimidinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2-Fluor-4-dichlormethyl-5-chlorpyrimidin-6-yl, 2-Fluor-5-chlorpyrimidin-4-yl; 2-Methyl-4-fluor-5-methylsulfonylpyrimidinyl-6; 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6- carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)- sulfonyl-4-chlortriazinyl-6-, 2-(3'-Sulfophenyl)-sulfonyl-4-chlortriazinyl-6-, 2,4-Bis-(3'-carboxyphenylsulfonyl-)- triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethylpyrimidinyl-4-, 2-Phenylsulfonyl-5-chlor-6-methyl-pyrimidinyl-4-, 2,6-Bis-methylsulfonyl-pyrimidinyl-4-, 2,6-Bismethylsulfonyl-5-chlor-pyrimidinyl-4-, 2,4-Bis-methylsulfonyl-pyrimidin-5-sulfonyl-, 2-Methylsulfonyl-pyrimidinyl-4, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoethylsulfonyl-6-methyl-pyrimidinyl-4-, 2-Methylsulfonyl-5-brompyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethylsulfonylbenzthiazol-5- oder -6-sulfonyl- oder -carbonyl-, 2-Phenylsulfonylbenzthiazol-5- oder -6-sulfonyl- oder carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl.

Des weiteren sind Reaktivgruppen der aliphatischen Reihe zu nennen, wie Acryloyl-, Mono-, Di- oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, β-(2,2,3,3-Tetrafluorcyclobutyl-2)-aryloxy-, oder β-Bromacryloyl-, oder β-Alkyl- oder Arylsulfoacrylolyl-Gruppe, wie - oder β-Methylsulfonylacryloyl, Chloracetyl, Vinylsulfonyl, $-SO_2CH_2CH_2Z$ worin Z = alkalisch abspaltbare Gruppe, insbesondere $-OSO_3H$, $-OCOCH_3$, $-OPO_3H_2$, $-OCOC_6H_5$, Di-$C_1$-$C_4$-Alkylamino, quartäres Ammonium, insbesondere $-\overset{\oplus}{N}$ ($C_1$-$C_4$-Alkyl)$X^{\ominus}$,

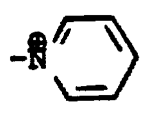 $X^{\ominus}$ oder 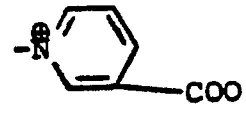

mit

$X^{\ominus}$ = Anion, insbesondere Halogen- oder Sulfat-Anion, $-S_2O_3H$, $-Cl$, $-Br$, $-F$, $-SCN$, $-NHSO_2CH_3$, $-OSO_2C_6H_5$.

Besonders bevorzugt sind Reaktivfarbstoffe der Formel

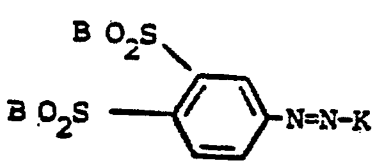

(2)

und solche der Formel

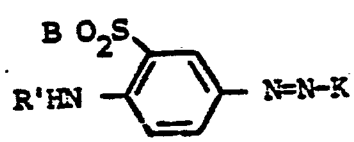

(3)

worin

R' = $(CH_2)_n$ NHY.

n = 2 oder 3 und
Y = faserreaktiver Rest.

Weiterhin bevorzugte Farbstoffe sind solche der Formeln

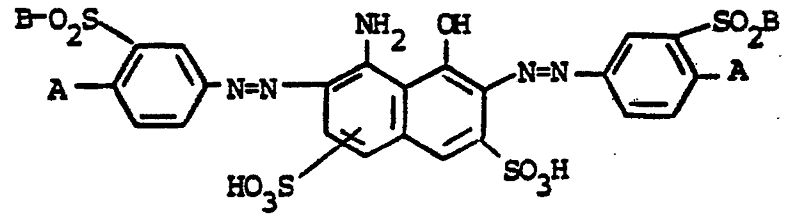

(4)

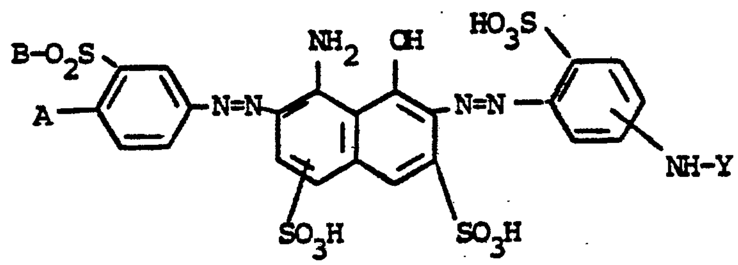

(5a)

worin Y ein faserreaktiver Rest ist und

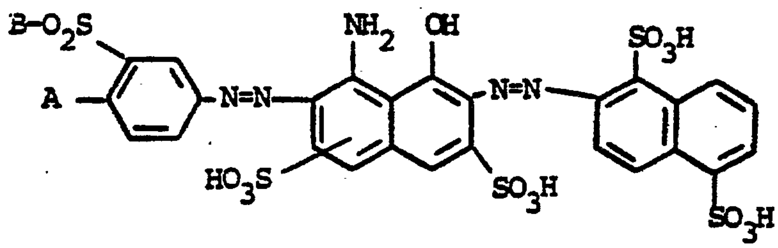

(5b)

Die Herstellung der Farbstoffe erfolgt durch Diazotierung von Aminen der Formel

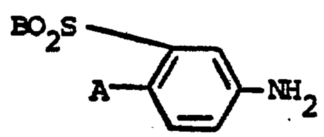

(6)

und Kupplung mit Kupplungskomponenten
K–H (7)
in an sich bekannter Weise.

Geeignete Kupplungskomponenten (7) sind beispielsweise solche der Hydroxybenzol-, Hydroxynaphthalin-, Aminobenzol-, Aminohydroxynaphthalin-, Aminohydroxybenzol-, Pyrazolon-, Pyridin-, Aminopyridin- oder Acetessigarylidreihe, insbesondere auch solche, die Sulfogruppen aufweisen. Insbesondere Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6, oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Ethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -ethylamino-8-hydroxynaphthalin-6-sulfonsäure, 2-(N-Acetyl-N-methylamino)-8-hydroxynaphthalin-6-sulfonsäure, 2-Acetyl-amino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(3'-Nitrobenzoyl-amino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Sulfo-4-methyl-6-hydroxypyridon-(2), 1-Ethyl-3-cyan- oder -3-chlor-4-methyl-6-hydroxypyridon-(2), 1-Ethyl-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyethylamino)-3-cyan-4-methyl-6-aminopyridin, 2,6-Bis-(2'-hydroxyethylamino)-3-cyan-4-methylpyridin, 1-Ethyl-3-carbamoyl-4-methyl-6-hydroxypyridon-(2), 1-Ethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2).

Bevorzugte Aminoverbindungen der Formel (6) sind z.B.:

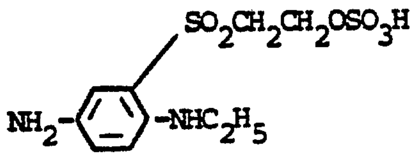

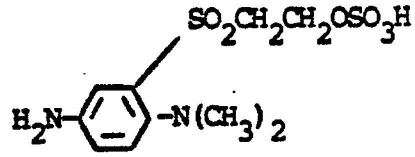

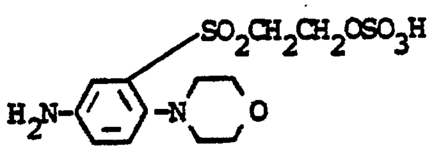

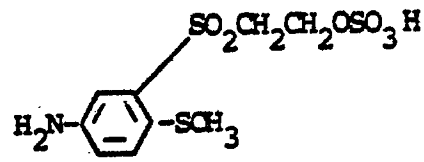

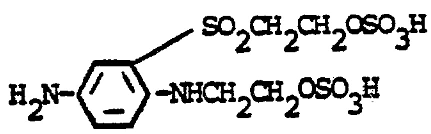

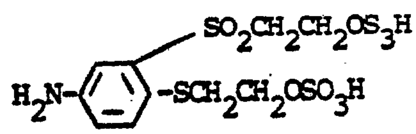

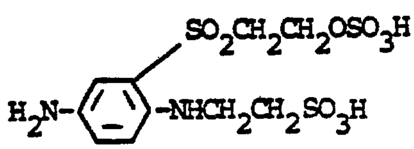

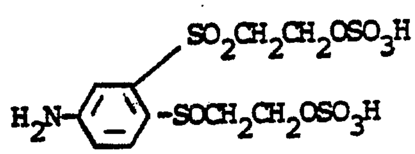

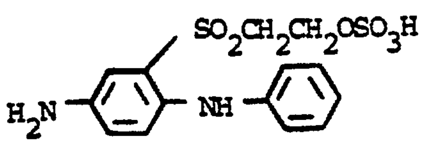

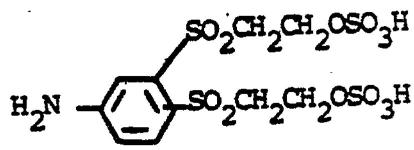

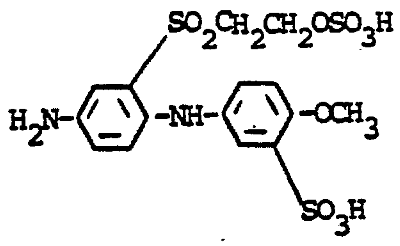

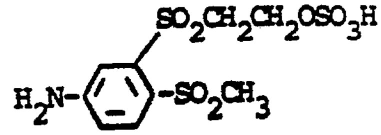

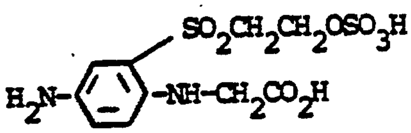

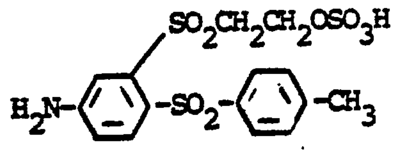

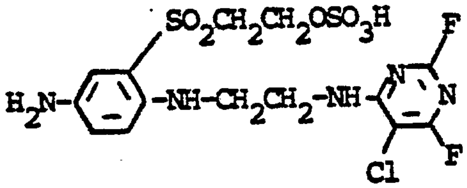

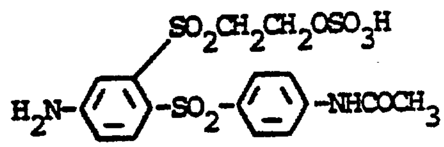

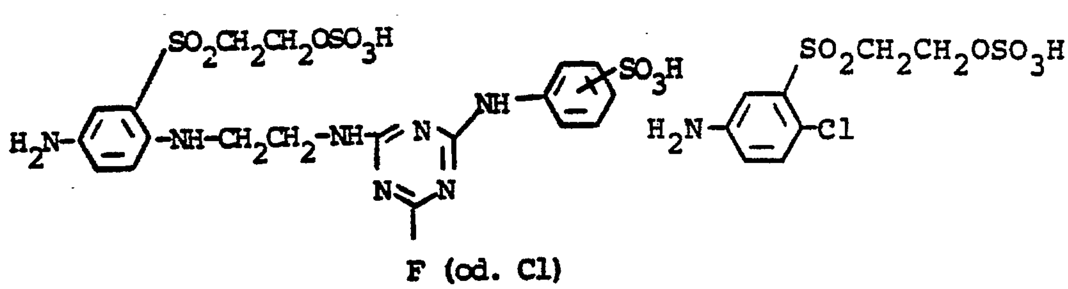

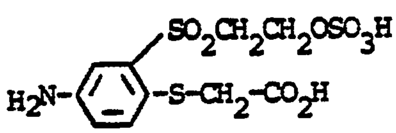

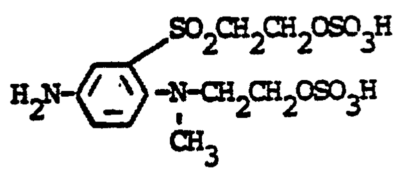

Farbstoffe der Formel (1) mit B = $CH_2CH_2OSO_3H$ sind auch herstellbar, indem man Farbstoffe der Formel (7)

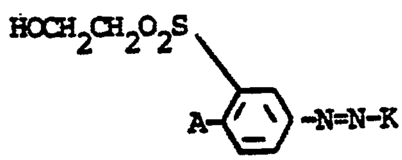

(7)

mit Oleum oder Schwefelsäuremonohydrat an der Hydroxyethyl-Gruppierung sulfatiert.

Generall können auch andere Hydroxyalkylreste in A oder K nach diesem Verfahren in Sulfatoalkylreste umgewandelt werden.

Die Herstellung der Aminoverbindungen (6) kann beispielsweise so erfolgen, daß man (2-Chlor-5-nitrophenyl)(2-hydroxyethyl)sulfon der Formel (8), das durch Ethoxylierung von 2-Chlor-5-nitrobenzolsulfinsäure unter neutralen wäßrigen Bedingungen zugänglich ist, mit Verbindungen der Formel HA bzw. entsprechender Salze NaA, wenn A = $SO_2R$ bzw. SR, unter HCl-Abspaltung umsetzt, die dabei resultierenden Nitrosulfone (9) anschließend reduziert und abschließend die Gruppe $-SO_2CH_2CH_2OH$ in die Gruppe $-SO_2B$ umgewandelt:

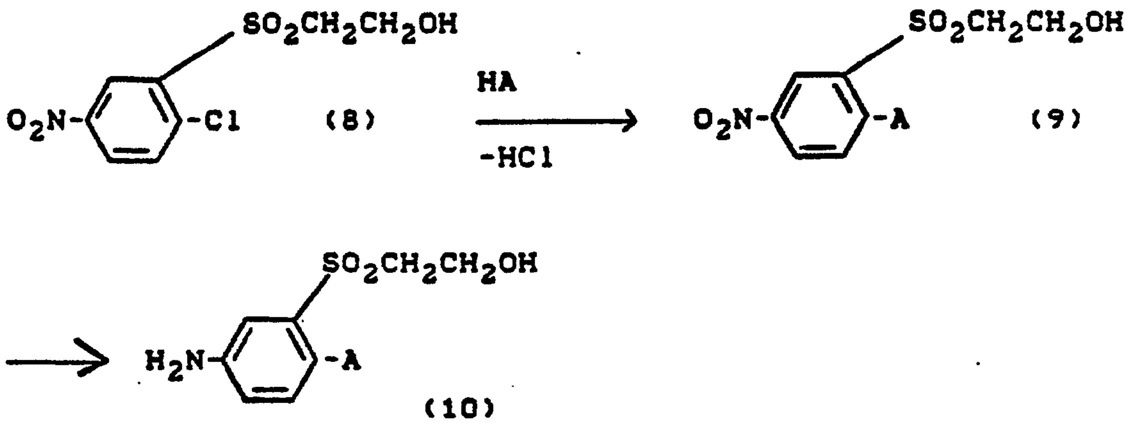

(8) (9)

(10)

Die Kondensation mit den Verbindungen HA bzw. NaA führt man oberhalb 70°C, am vorteilhaftesten zwischen 80–120°C, gegebenenfalls unter Druck durch. Als Reaktionsmedium kann Wasser, ein organisches Lösungsmittel, wie z.B. ein Alkohol oder Dimethylformamid, oder eine Mischung aus diesen dienen. Zum Abfangen des freiwerdenden Chlorwasserstoffs kann eine Hilfsbase, wie Triethylamin, Natriumhydrogencarbonat oder Soda, zugesetzt werden oder aber man verwendet im Falle, in dem HA ein Amin darstellt, die etwa zweifach äquimolare Menge an Nucleophil. Die Reduktion von (9) kann katalytisch mit Wasserstoff, mit Metall/Säure (z.B. Eisen/Essigsäure) oder mit anderen für aromatische Nitroverbindungen üblichen Reduktionsmittel erfolgen.

Eine andere Darstellungsvariante für die Nitroverbindungen (9) besteht darin, daß man die Alkalisalze der 2-Chlor-5-nitrobenzolsulfinsäure mit Verbindungen HA bzw. NaA, wenn A = $SO_2R$ oder SR, oberhalb 70°C in wäßrigem Medium, gegebenenfalls unter Druck kondensiert und die Kondensationsprodukte der Formel

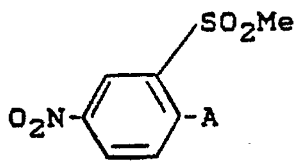
(11) Me = Li, Na oder K

mit Ethylenoxid in der Wärme und unter Druck und neutralen Bedingungen alkyliert.

Nitroverbindungen der Formel (9) mit A = SOR sind zugänglich, indem man Verbindungen der Formel (9) mit A = SR unter schonenden Bedingungen mit $H_2O_2$ oxidiert.

Unter drastischeren Bedingungen (>50°C) oder durch Wahl eines anderen Oxidationsmittels (z.B. Chlorlauge, Kaliumpermanganat) resultieren daraus Nitroverbindungen der Formel (9) mit A = $SO_2R$, wie z.B. das Disulfon der Formel

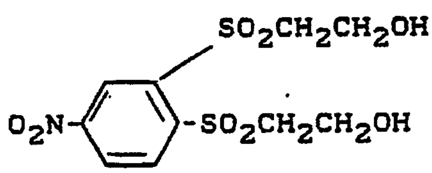
(12)

Nach katalytischer Reduktion der Nitrogruppe mit Wasserstoff/Raney-Nickel wird (12) mit Oleum sulfatiert, bzw. nach dem in EP-A 107 614 beschriebenen Verfahren umgesetzt.

Diazokomponenten der Formel (6), die im Rest R mit einer zusätzlichen faserreaktiven Gruppierung Y substituiert sind, werden nach einem leichtmodifizierten Verfahren hergestellt, wie z.B. die Diazokomponente für Farbstoffe der Struktur (3). Danach wird das Aminoalkyl-substituierte Diaminosulfon der Formel

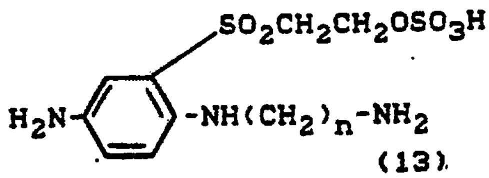

n = 2 oder 3

(13)

bei pH 7–8 mit einer heterocyclischen Reaktivkomponente Hal–Y (Hal = F, Cl, Br), wie z.B. 5-Chlor-2,4,6-trifluorpyrimidin, kondensiert. Es ist aber auch möglich, (13) zu diazotieren und auf HK zu kuppeln und erst anschließend die Kondensation mit Hal-Y durchzuführen.

Die Reaktivfarbstoffe der Formel (1) eignen sich zum Färben und Bedrucken der verschiedenartigsten Materialien, wie Seide, Leder, Wolle, Polyamidfasern und Polyesterfasern, insbesondere aber cellulosehaltiger Materialien, wie Leinen, Zellstoff, regenerierter Cellulose und vor allem Baumwolle. Sie eignen sich sowohl im Ausziehverfahren als auch für das Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, evtl. in der Wärme, fixiert werden.

Die Reaktivfarbstoffe der Formel (1) eignen sich besonders zum Färben von Baumwolle nach dem Ausziehverfahren und dem Kaltverweilverfahren, wobei die Differenz zwischen Ausziehgrad und Fixiergrad bemerkenswert klein, d.h. der Hydrolyseanteil sehr gering ist.

Die Reaktivfarbstoffe der Formel (1) zeichnen sich durch hohe Reaktivität und gutes Fixiervermögen aus. Sie erfordern beim Pad-steam-Verfahren nur kurze Dämpfzeiten. Die Farbstoffe sind hervorragend löslich und ergeben Färbungen mit gutem Echtheitsniveau.

Farbstoffe der Formel (1), bei denen die Reste K und R keinen wasserlöslichmachenden Substituenten tragen, sind vor allem zum einbadigen Färben von Polyester-Baumwolle-Mischgeweben geeignet, wobei neben der Baumwolle bei erhöhter Temperatur auch der Polyesteranteil ausreichend färbbar ist. Färbeverfahren dieses Typs werden ausgiebig in der DE-OS 2 362 683 beschrieben.

In der US-A 4 035 351 werden Farbstoffe auf Basis gegebenenfalls substituierter 1-Amino-3-β-sulfatoethyl-sulfonyl-benzole als Diazokomponente und Aminonaphthalinen als Kupplungskomponente beschrieben.

In der älteren EP-A 0 181 585 (Stand der Technik nach Art. 54(3) EPÜ) werden Azofarbstoffe der Formel D–N=N–K beschrieben, wo D u.a. einen Rest der Formel

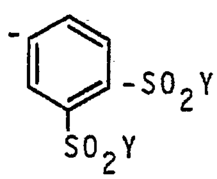

bedeutet, mit Y = $-CH{=}CH_2$ oder $-CH_2CH_2X$ mit X = durch Alkali eliminierbarer Substituent, und K für Reste von Kupplungskomponenten der Aminobenzol-, Pyridon-, Pyrazolon- und Aminopyrazolreihe steht.

Beispiel 1

30,7 g [5-Nitro-2-(2-hydroxyethyl)mercaptophenyl](2-hydroxyethyl)sulfon und 2 g Natriumwolframat werden in 100 ml Wasser/100 ml Eisessig auf 80°C erwärmt. Dazu tropft man langsam 20 g einer 35%igen Wasserstoffperoxidlösung, erhöht anschließend auf 90°C und läßt nochmals 20 g Wasserstoffperoxid zulaufen. Man rührt eine Stunde bei 90–95°C nach, klärt, kühlt auf Raumtemperatur ab und isoliert das ausgefallene kristalline Nitrodisulfon der Formel

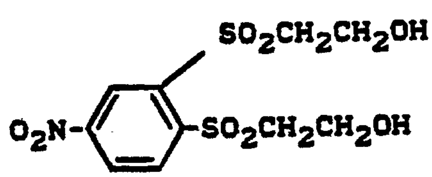

(12)

Nach dem Trocknen werden 31,4 g als farblose Nadeln vom Schmelzpunkt 192°C erhalten.

27,1 g Nitrodisulfon (12) werden in 200 ml Isopropanol bei 50°C gelöst, mit 3 g Raney-Nickel versetzt und bei 65°C und 5–10 bar im Autoklaven bis zur vollständigen Wasserstoffaufnahme hydriert. Der Katalysator wird durch Filtration von der abgekühlten Reaktionslösung abgetrennt und die Lösung aufkonzentriert. Der Rückstand wird aus 200 ml Wasser umkristallisiert. Man erhält 22,9 g Aminodisulfon der Formel (14).

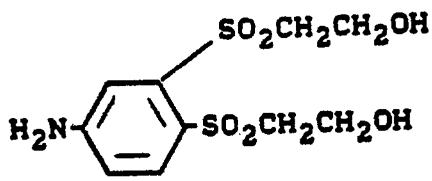

(14)

Bei 0°C trägt man 21,6 g Aminodisulfon (14) portionsweise in 50 g Schwefelsäuremonohydrat ein. Nach erfolgter Zugabe erwärmt man langsam auf Raumtemperatur und rührt die Mischung für zwei Stunden. Danach erhöht man die Temperatur innerhalb von 30 Minuten auf 40°C und setzt das Rühren bei dieser Temperatur für weitere drei Stunden fort. Die Reaktionslösung wird auf 200 g Eis/100 ml Wasser ausgetragen, und die resultierende Lösung unter Eiszugabe mit Natriumhydrogencarbonat auf pH 6 gestellt. Man dampft die Lösung im Vakuum bei 40–50°C zur Trockene ein und erhält das wasserlösliche Diaminosulfon der Formel (15),

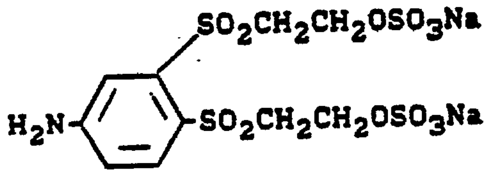

(15)

das reichlich Natriumsulfat enthält

Die durch Austragen auf Eis erhaltene Lösung des Aminodisulfons (15) kann auch ohne Zwischenisolierung direkt diazotiert und mit der Kupplungskomponenten umgesetzt werden.

Beispiel 2

27 g (2-Chlor-5-nitrophenyl)(2-hydroxyethyl)sulfon und 15 g Morpholin werden in 50 ml Isopropanol für eine Stunde unter Rückfluß erwärmt. Die auf 60°C abgekühlte Reaktionsmischung wird mit 200 ml Wasser verdünnt, auf pH 7,0 gestellt und nach einstündiger Nachrührzeit abgesaugt. Nach dem Trocknen bei 70°C erhält man 31 g Nitrosulfon der Formel (16). (Analog lassen sich beliebige primäre und sekundäre Alkylamine sowie donorsubstituierte Aniline umsetzen)

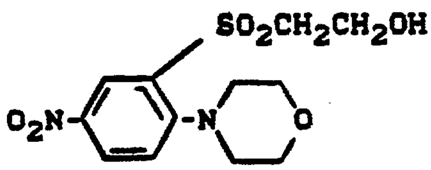

(16)

31 g Nitrosulfon der Formel (16) werden in 200 ml Methanol suspendiert, mit 3 g aktivierten Raney-Nickel versetzt und bei 50°C mit Wasserstoff unter Druck hydriert. Nach vollständiger Wasserstoffaufnahme wird die abgekühlte Suspension mit 200 ml Aceton verdünnt, der Katalysator durch Filtration abgetrennt und das Filtrat aufkonzentriert. Es bleiben 26,5 g einheitliches Aminosulfon der Formel (17) zurück. (Schmelzpunkt: 188°C)

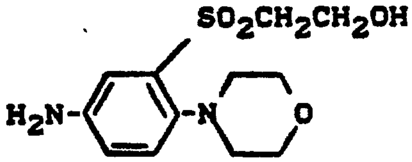

(17)

Diese 26,5 g Aminosulfon werden bei 20°C in 50 ml 20%iges Oleum eingetragen. Nach 2 Stunden Rühren bei 30°C gießt man die Lösung auf eine Mischung aus 100 g Eis/50 ml Wasser. Mit fester Soda stumpft man die Lösung auf pH 2,5 bis 3,0 ab und salzt mit 40 g Kaliumchlorid aus. Nach Absaugen und Trocknen erhält man 75 g salzhaltiges Sulfatoethylsulfonyl-Diazokomponente der Formel (18)

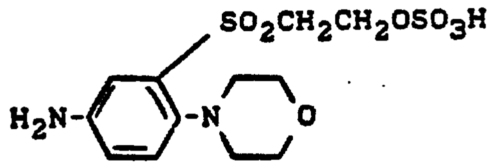 (18)

Beispiel 3

93 g (2-Chlor-5-nitrophenyl)(2-hydroxyethyl)sulfon werden in 200 ml Isopropanol mit 50 g fester Soda und 70 g Mercaptoethanol für 6 Stunden unter Rückfluß erwärmt. Die Mischung wird bei 50°C von den ausgefallenen Salzen abgetrennt. Die Lösung wird am Rotationsverdampfer eingeengt, der Rückstand mit 300 ml Wasser behandelt und der kristalline Niederschlag abgetrennt. Nach dem Trocknen erhält man 91 g [2-(2-Hydroxyethyl)mercapto-5-nitrophenyl]-(2-hydroxyethyl)sulfon vom Schmp. 109°C.

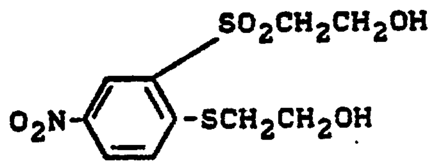

91 g des Mercaptonitrosulfons werden in 200 ml Isopropanol gelöst, und die Lösung mit 5 g Raney-Nickel versetzt. Es wird wie in Beispiel 2 beschrieben katalytisch hydriert und aufgearbeitet. Es werden 94 g [5-Amino-2-(2-hydroxyethyl)mercaptophenyl](2-hydroxyethyl)sulfon als zähes, etwas dunkelgefärbtes Öl isoliert

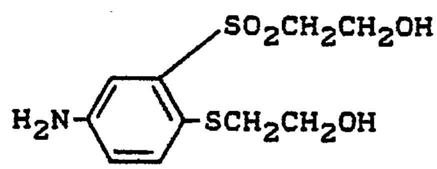

Dieses Öl wird analog dem Aminodisulfon in Beispiel 1 mit 20%igem Oleum sulfatiert. Die resultierende wäßrige Lösung kann direkt zur Weiterdiazotierung eingesetzt werden. Die neue Diazokomponente hat die Struktur

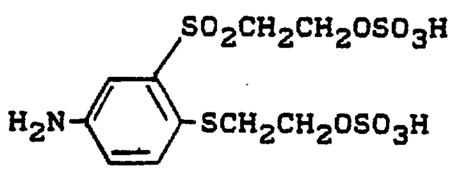

Beispiel 4

70 g (2-Chlor-5-nitrophenyl)(2-hydroxyethyl)sulfon und 62 g Natrium-p-Toluolsulfinat werden in 400 ml Wasser bei 110°C im Autoklaven unter Druck (1,5 bar) umgesetzt. Die Reaktionszeit beträgt 4–5 Stunden. Die Reaktionsmischung wird mit 250 ml Wasser verdünnt und bei 60°C abgesaugt; man wäscht den Niederschlag mehrmals mit 100 ml Wasser nach und trocknet. Es resultieren 90 g Disulfon der Formel vom Schmelzpunkt 184°C.

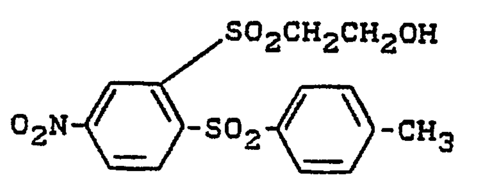

77 g des obigen Disulfons werden in Analogie zu Beispiel 1 in Isopropanol bei 50° C katalytisch hydriert. Aufkonzentrierung der Reaktionslösung liefert 61 g kristallines Aminodisulfon (Schmelzpunkt 169°C) der Formel

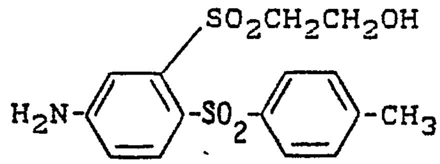

60 g dieses Aminodisulfons werden in der in Beispiel 1 beschriebenen Verfahrensweise in 100 ml 20%igem Oleum sulfatiert. Austragen auf Eis liefert eine feinkristalline Substanz der Struktur

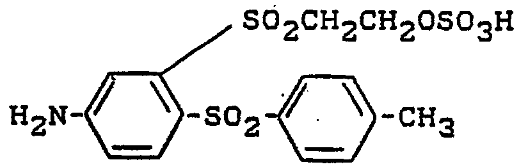

Beispiel 5

145 g des mono-Natriumsalzes des Aminodisulfons der Formel (15) (s. Beispiel 1) werden in 200 ml Wasser, 200 g Eis und 100 ml angerührt und tropfenweise unterhalb von 5°C mit 71 ml einer 30%igen Natriumnitritlösung versetzt. Man rührt 30 Minuten nach und entfernt anschließend dem Nitritüberschuß mit wenigen ml Amidosulfonsäurelösung. Zu dieser Suspension tropft man innerhalb von 30 Minuten eine neutrale Lösung von 50 g H-Säure (mono-Natriumsalz) in 250 ml Wasser und stellt dann den pH dieser Mischung durch langsame Zugabe einer 20%igen Kaliumhydrogencarbonatlösung innerhalb einer Stunde auf 2,0. Nach einer weiteren Stunde erhöht man den pH langsam auf 6,0 bis 6,5, versetzt mit 10 g Natriumphosphat und 15 g Dinatriumphosphat und führt nach einstündiger Nachrührzeit eine Sprühtrocknung durch. Es wird ein dunkles salzhaltiges Farbstoffpulver erhalten, das Baumwolle sowohl im Ausziehverfahren wie auch im Klotzkaltverweilverfahren mit hohen Fixierausbeuten in schwarzen Tönen färbt ($\lambda_{max}$ = 590 nm ($H_2O$)).

Der Farbstoff besitzt die Struktur

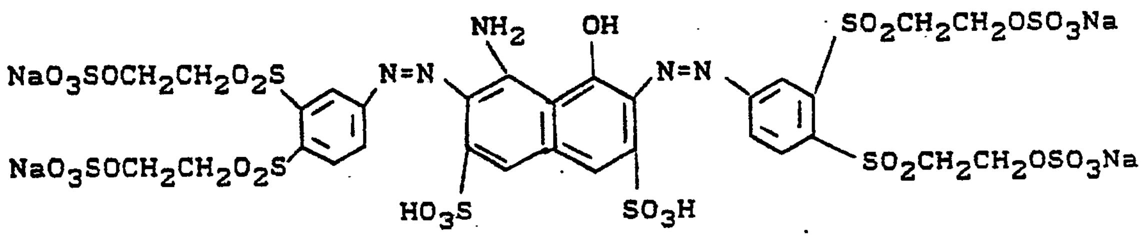

Nach dem gleichen Verfahren erhält man unter Verwendung der entsprechenden Diazoverbindungen die folgenden Farbstoffe:

Beispiel 6

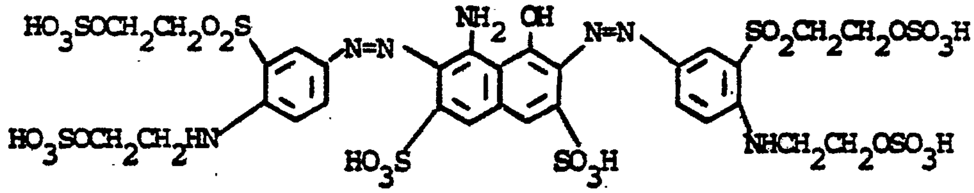

Beispiel 7

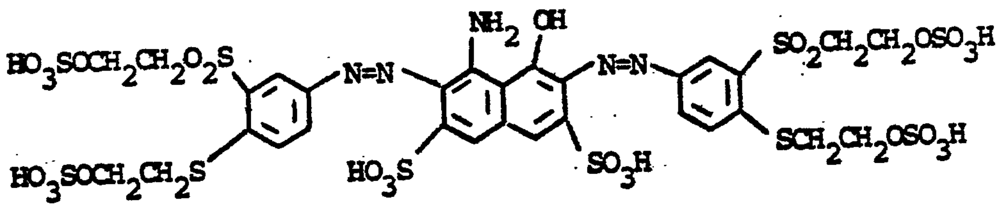

Beispiel 8

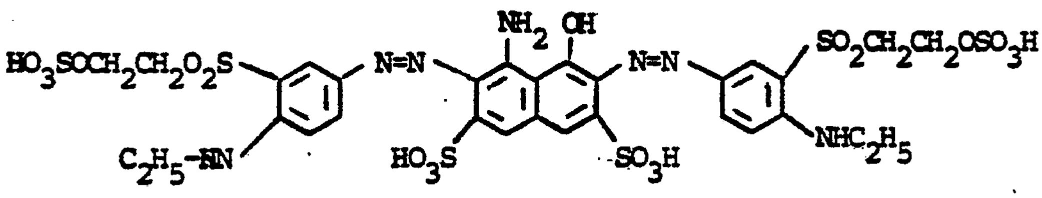

Beispiel 9

72,5 g mono-Natriumsalz des Aminodisulfons der Formel (15) werden analog Beispiel 5 diazotiert und auf 50 g H-Säure (mono-Natriumsalz) gekuppelt. Zur roten neutralen Farbstofflösung gibt man 450 ml einer wäßrigen Lösung die 48 g diazotierte 2-Amino-1,5-naphthalin-disulfonsäure enthält und hält dabei den pH durch Zugabe von verdünnter Natronlauge zwischen 5,5–6,5.

Nachdem keine pH-Änderung mehr zu beobachten ist, wird sprühgetrocknet. Der als dunkles Pulver isolierte Farbstoff der Struktur

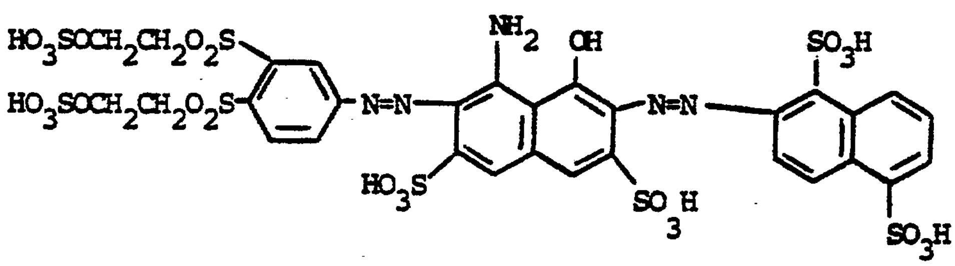

färbt Baumwolle in marineblauen bis schwarzen Tönen ($\lambda_{max}$ = 623 nm ($H_2O$)).

Analog Beispiel 9 erhält man bei Verwendung der entsprechenden Diazokomponenten die folgenden Farbstoffe

Beispiel 10

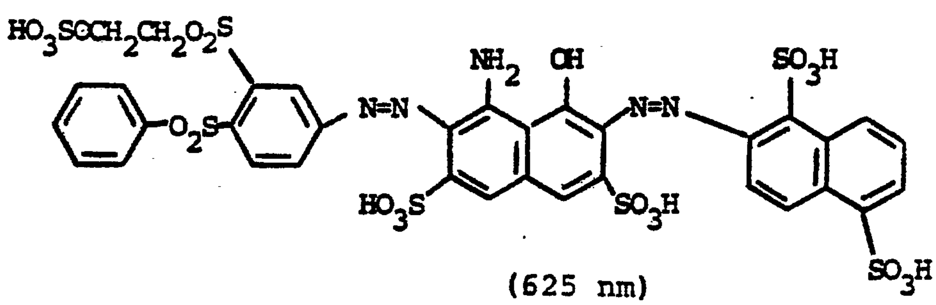

(625 nm)

Beispiel 11

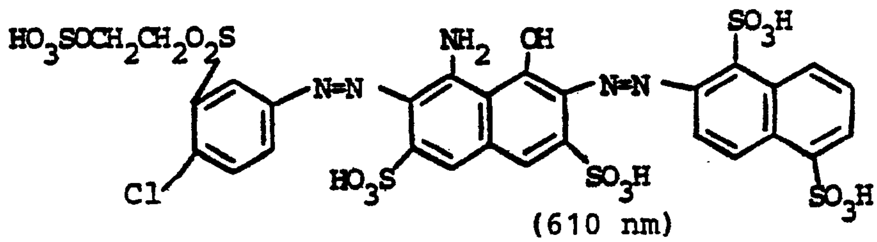

(610 nm)

Beispiel 12

Ersetzt man in Beispiel 9 die zweite Diazokomponente durch diazotierte 2-Amino-4-[4'-(2',6'-difluor-5'-chlor)-pyrimidyl]amino-benzolsulfonsäure, so resultiert folgender bifunktionelle Reaktivfarbstoff, der auf Baumwolle intensive Schwarzfärbungen mit hoher Fixierausbeute ergibt (616 nm)

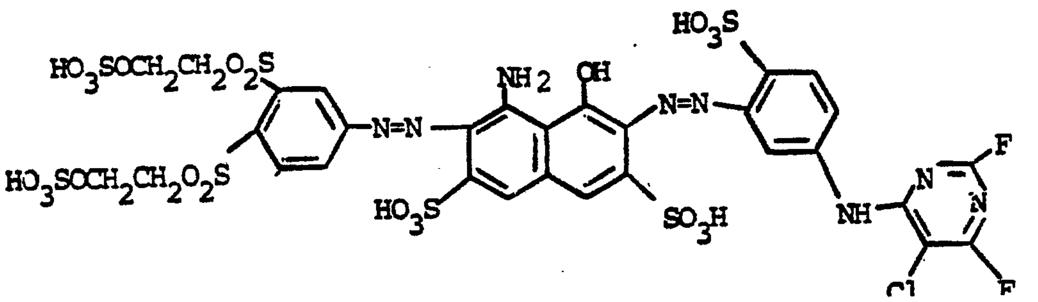

Weitere wertvolle Reaktivfarbstoffe werden erhalten, wenn man gemäß den Angaben in Beispiel 5 die entsprechenden 2-substituierten (5-Aminophenyl)(2-sulfatoethyl)sulfone diazotiert und auf die entsprechenden sulfogruppenhaltigen Kupplungskomponenten in üblicher Weise kuppelt:

Beispiel 13

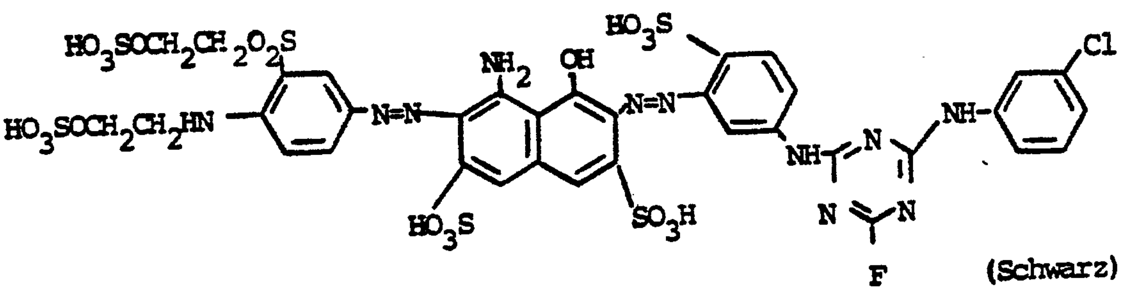

(Schwarz)

Beispiel 14

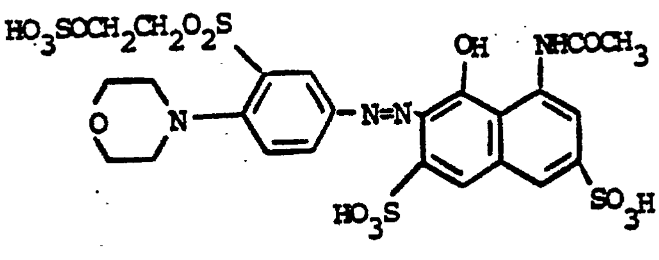

(rot)

(520 nm)

Beispiel 15

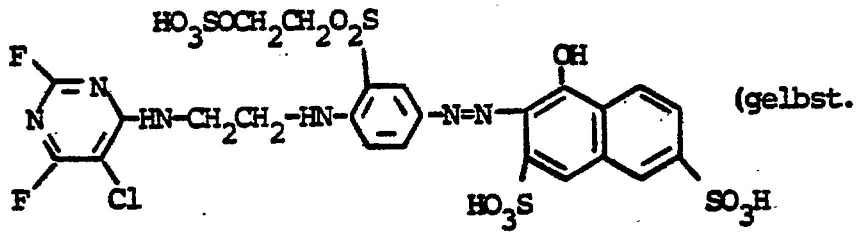

(gelbst. rot)

Beispiel 16

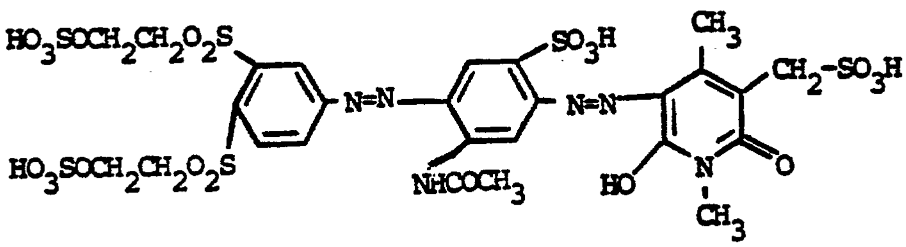

(orange)

Beispiel 17

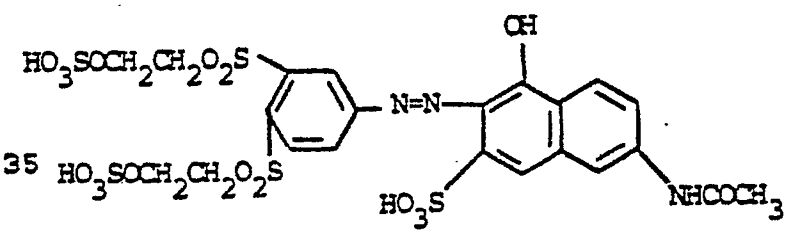

(orange)

Beispiel 18

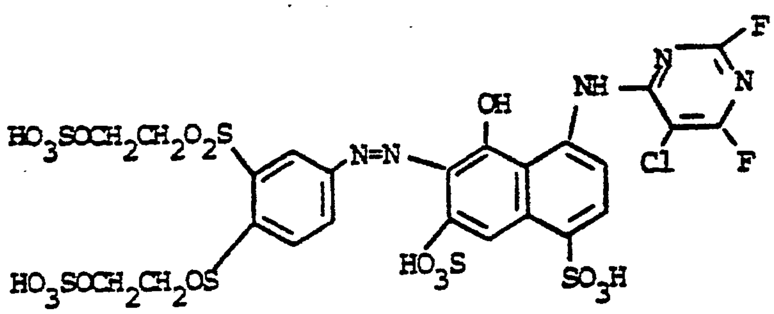

(blaust. rot)

Beispiel 19

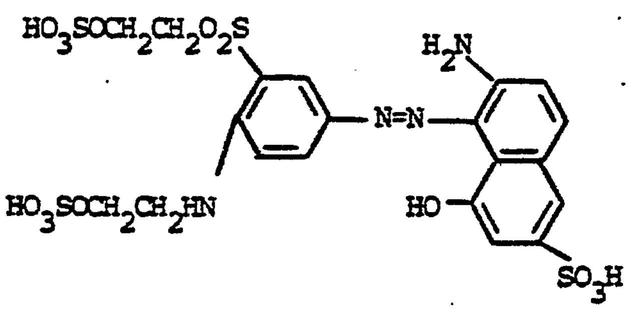

(rot)

Beispiel 20

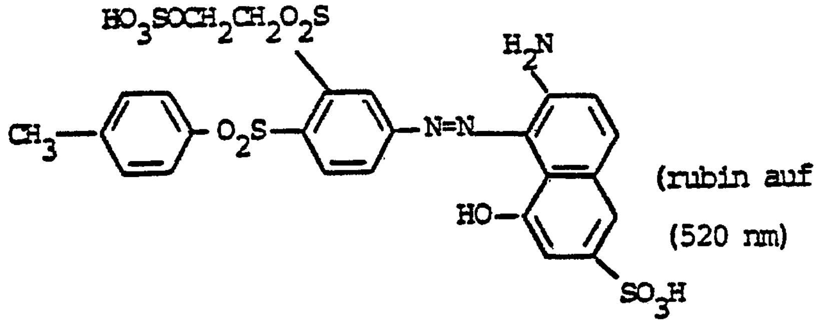

(rubin auf Polyamid)

(520 nm)

Beispiel 21

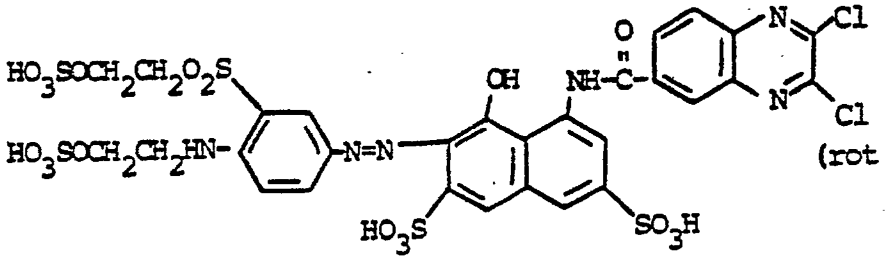

(rot auf Bw)

Beispiel 22

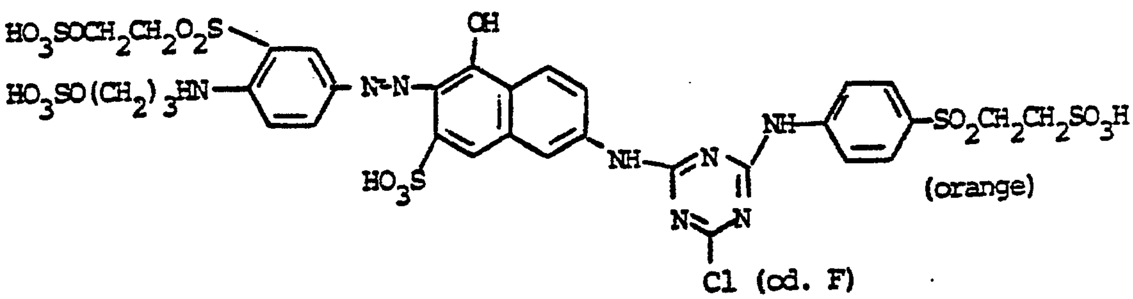

(orange)

Beispiel 23

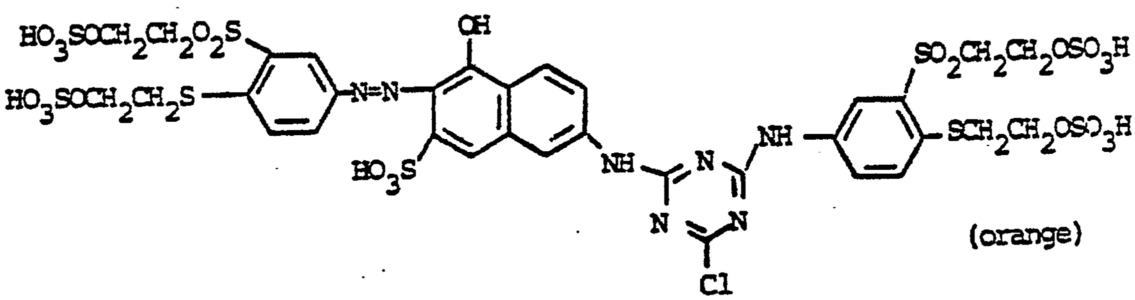

(orange)

Beispiel 24

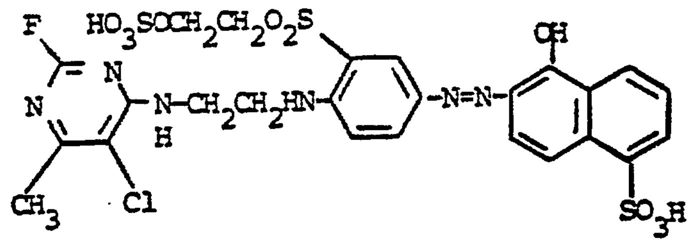

(gelber Druckfarbstoff auf Bw)

Beispiel 25

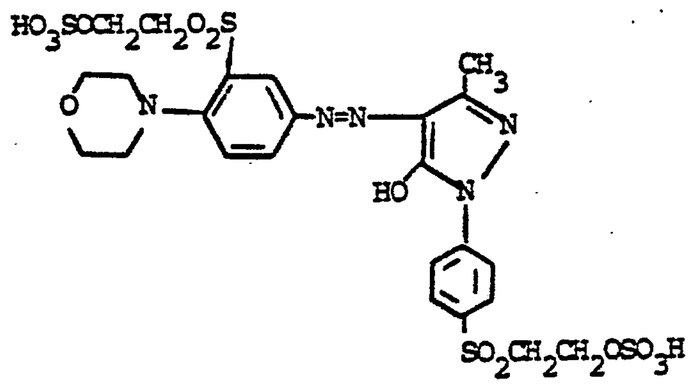

Beispiel 26

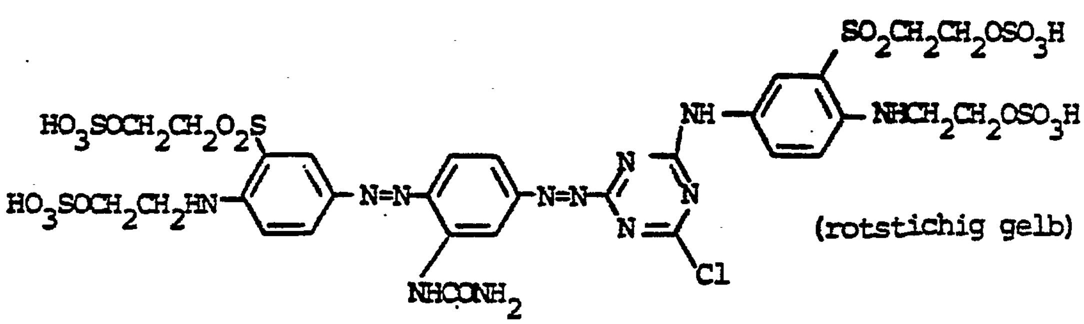

(rotstichig gelb)

Beispiel 27

64 g der Diazokomponente der Formel

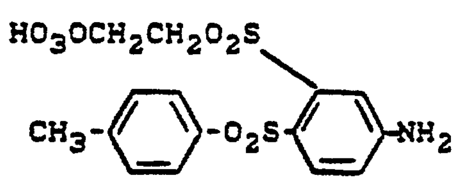

Werden in 200 ml Wasser/100 g Eis und 150 ml konz. Salzsäure bei 0–5°C angerührt und tropfenweise mit 35 ml einer 30%igen Natriumnitritlösung versetzt. Nach 2 Stunden Rühren bei 5–10°C entfernt man den Nitritüberschuß mit Amidosulfonsäurelösung. Dann gibt man eine Lösung von 27,3 g N-Ethyl-N-(β-Cyanoethyl)-3-methylanilin in 50 ml Wasser/10 ml konz. Salzsäure zu und rührt die Kupplungsmischung 2 Stunden bei 10°C. Nach Zugabe von 200 g Eis stellt man den pH der Mischung langsam mit verdünnter

Natronlauge auf pH 2,5 bis 3 und hält ihn für weitere 2 Stunden konstant. Der ausgefallene Farbstoff wird bei pH 3,5 abgesaugt, mit zweimal 250 ml Wasser nachgewaschen und getrocknet. Es resultieren ca. 90 g eines dunkelroten Farbstoffs, der sich besonders für das einbadige Färben oder Drucken von Polyester/Baumwolle-Mischgeweben in rotstichig orangenen Farbtönen eignet. So wird z.B. das Gewebe mit einer Farbstoffflotte geklotzt, die ca. 6 g/l des obigen Farbstoffes, 2 g/l Natriumhydrogencarbonat sowie übliche Färbereihilfsmittel enthält; das Gewebe wird auf 75% Flottenaufnahme abgequetscht und evtl. nach Zwischentrocknung bei 120°C thermoisoliert. Nach Seifen, Klarspülen und Trocknen erhält man ein einheitlich gefärbtes Mischgewebe.

Für den gleichen Anwendungsbereich sind auch die folgenden Farbstoffe geeignet, die einheitliche Färbungen in den angegebenen Farbtönen liefern:

Beispiel 28

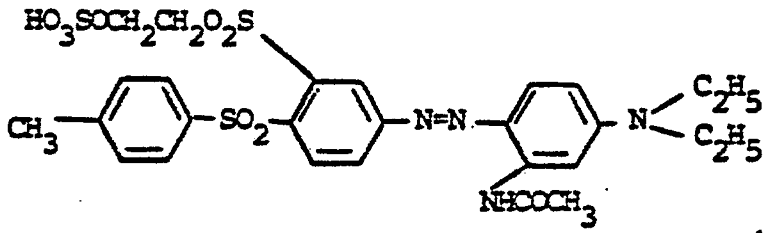

(gelbst. rot)

(523 nm)

Beispiel 29

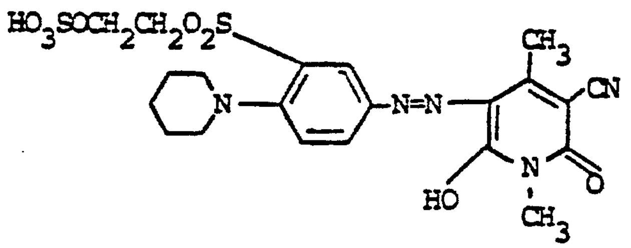

(rotstichig gelb)

(436 nm)

Beispiel 30

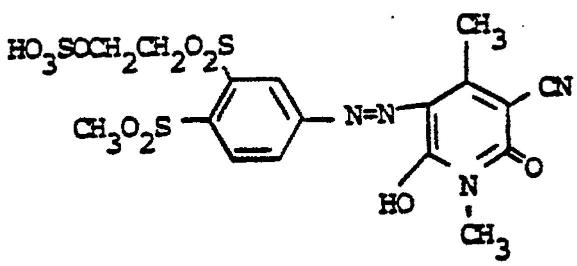

(grünstichig gelb)

(421 nm)

Beispiel 31

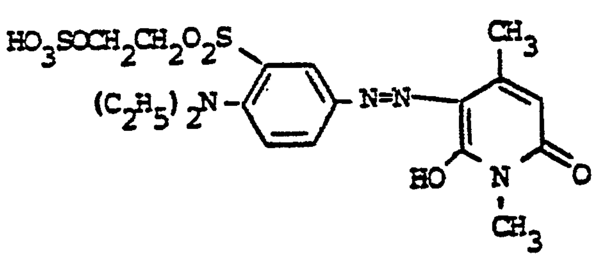

(gelb)

Beispiel 32

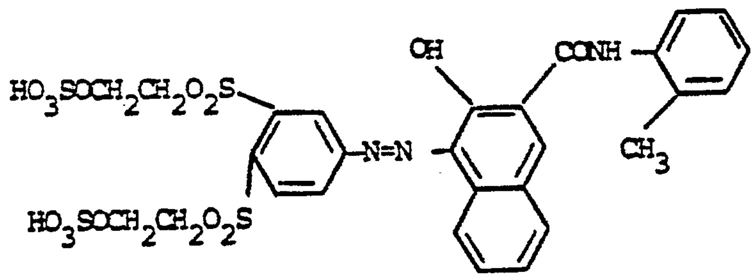

(scharlach)

## Patentansprüche

1. Farbstoffe der Formel

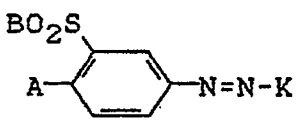

worin
A = NHR, NR R, SR, SOR, $SO_2R$, Cl insbesondere $SO_2B$,
B = $-CH=CH_2$ oder $-CH_2CH_2-Z$ worin
Z = alkalisch eliminierbarer Rest oder OH
R = Substituent, insbesondere gegebenenfalls substituiertes $C_1$–$C_6$-Alkyl, Aralkyl, Aryl, Alkenyl oder Hetaryl, wobei die beiden Reste R zusammen auch für die restlichen Glieder eines gegebenenfalls weitere Heteroatome aufweisenden 5- oder 6-Ringsystems stehen können, insbesondere für

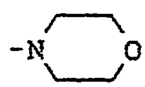 , 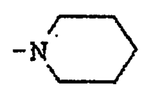 , 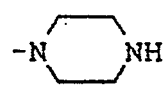

K = Rest einer Kupplungskomponente der Hydroxybenzol-, Hydroxynaphthalin, Hydroxy-aminonaphthalin-, Aminobenzol-, Acetessigarylidreihe oder der aromatisch-heterocyclischen Reihe, mit Ausnahme solcher Farbstoffe in denen A = $SO_2B$ und gleichzeitig K = Kupplungskomponente der Aminobenzol-, Pyrazolon-, Aminopyrazol- oder Pyridonreihe ist.

2. Reaktivfarbstoffe des Anspruchs 1 der Formel

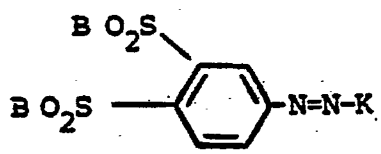

(2)

3. Reaktivfarbstoffe des Anspruchs 1 der Formel

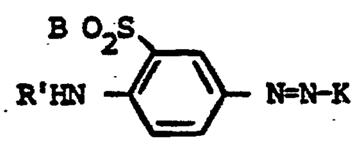

(3)

worin
R' = $(CH_2)_nNHY$,
n = 2 oder 3 und
Y = faserreaktiver Rest ist.

4. Reaktivfarbstoffe des Anspruchs 1 der Formeln

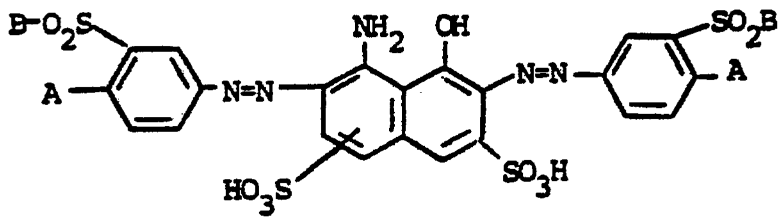

(4)

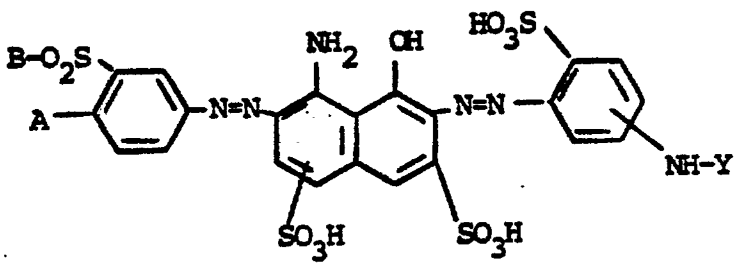

(5a)

worin Y ein faserreaktiver Rest ist und

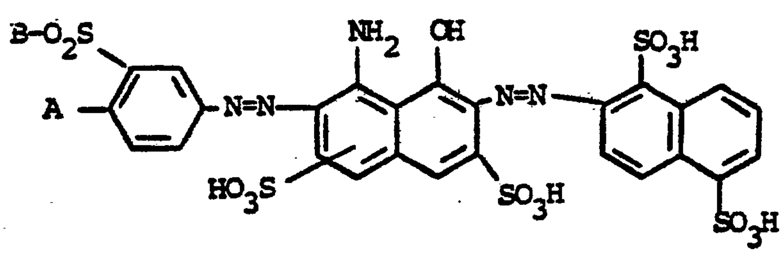

(5b)

5. Verwendung der Farbstoffe der Ansprüche 1–4 zum Färben und Bedrucken natürlicher und synthetischer Fasermaterialien.

6. Mit den Farbstoffen der Ansprüche 1–4 gefärbte oder bedruckte natürliche oder synthetische Fasermaterialien.

**Claims**

1. Dyestuffs of the formula

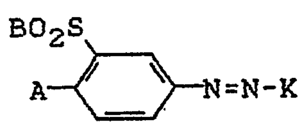

wherein

A = NHR, NR R, SR, SOR, $SO_2R$, Cl, in particular $SO_2B$,

B = $-CH{=}CH_2$ or $-CH_2CH_2-Z$ wherein

Z = alkalinically eliminatable radical or OH,

R = substituent, in particular optionally substituted $C_1$–$C_6$-alkyl, aralkyl, aryl, alkenyl or hetaryl, it being possible for the two radicals R also to stand together for the remaining members of a 5- or 6-ring system which may have further hertero atoms, in particular for

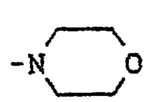 , 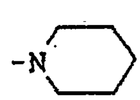 , 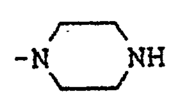

K = radical of a coupling component of the hydroxybenzene, hydroxynaphthalene, hydroxy-aminonaphthalene, aminobenzene, acetoacetarylide series or of the aromatic heterocyclic series, with the exception of those dyestuffs in which A = $SO_2B$ and simultaneously K = coupling component of the aminobenzene, pyrazolone, aminopyrazole or pyridone series.

2. Reactive dyestuffs of Claim 1 of the formula

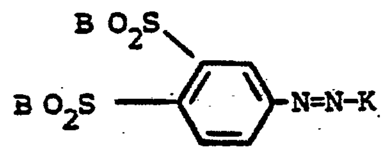

(2)

3. Reactive dyestuffs of Claim 1 of the formula

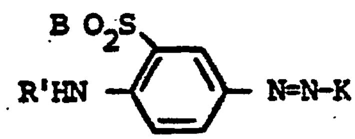

(3)

wherein
R' = $(CH_2)_nNHY$,
n = 2 or 3 and
Y = fibre-reactive radical.

4. Reactive dyestuffs of Claim 1 of the formula

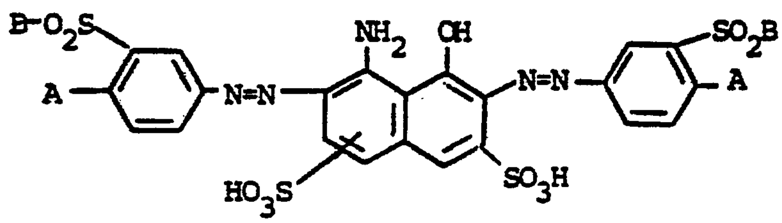

(4)

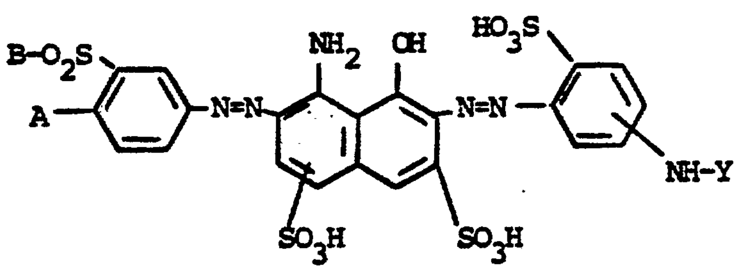

(5a)

wherein Y is a fibre-reactive radical and

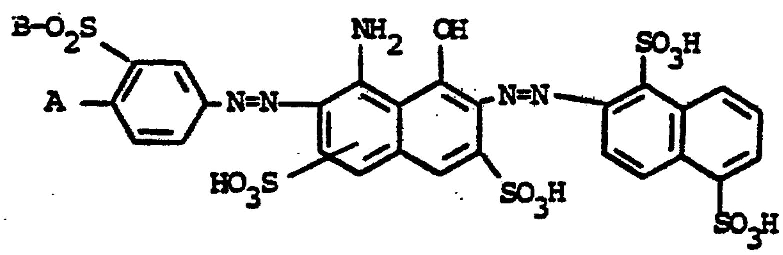

(5b)

5. Use of the dyestuffs of Claims 1–4, for dyeing and printing natural and synthetic fibre materials.

6. Natural or synthetic fibre materials dyed or printed with the dyestuffs of Claims 1–4.

## Revendications

1. Colorants de formule

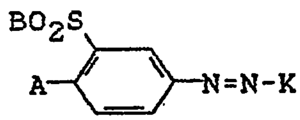

dans laquelle

A représente un groupe NHR, NR R, SR, SOR, $SO_2R$, Cl, en particulier $SO_2B$,

B représente $-CH{=}CH_2$ ou $-CH_2CH_2Z$, où

Z représente un reste éliminable en milieu alcalin, ou OH,

R représente un substituant, en particulier un groupe alkyle en $C_1$ à $C_6$, aralkyle, aryle, alcényle ou hétaryle, éventuellement substitués, les deux restes R pouvant représenter aussi, pris ensemble, les chaînons restants d'un système cyclique pentagonal ou hexagonal présentant éventuellement d'autres hétéroatomes, en particulier

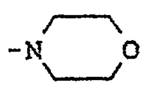 , 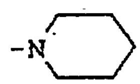 , 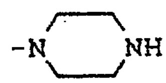

K représente le reste d'un copulant de la série de l'hydroxy-benzène, d'un hydroxynaphtalène, d'un hydroxy-amino-naphtalène, de l'aminobenzène, des acétoacetayrlides ou de la série des hétérocycles aromatiques, à l'exclusion des colorants dans lesquels A représente $SO_2B$ et, en même temps, K représente un copulant de la série de l'aminobenzène, de la pyrazolone, de l'aminopyrazole ou de la pyridone.

2. Colorants réactifs selon la revendication 1, de formule

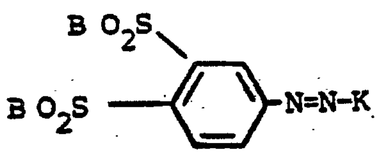

(2)

3. Colorants réactifs selon la revendication 1, de formule

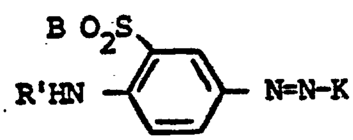

(3)

dans laquelle

R' représente un groupe $(CH_2)_nNHY$,

n vaut 2 ou 3, et

Y représente un reste pouvant réagir avec les fibres.

4. Colorants réactifs selon la revendication 1, répondant aux formules

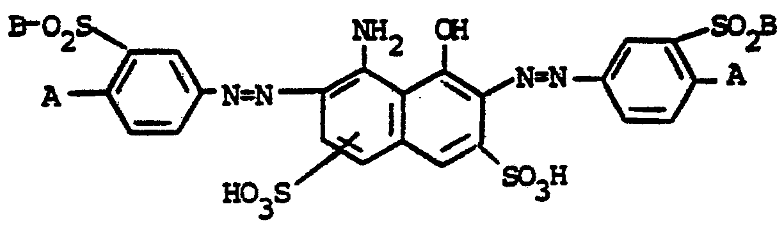

(4)

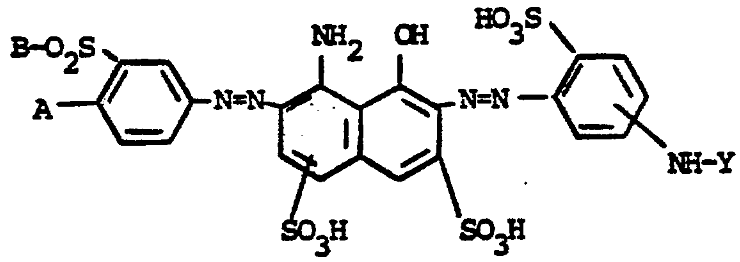

(5a)

où Y représente un reste pouvant réagir avec les fibres, et

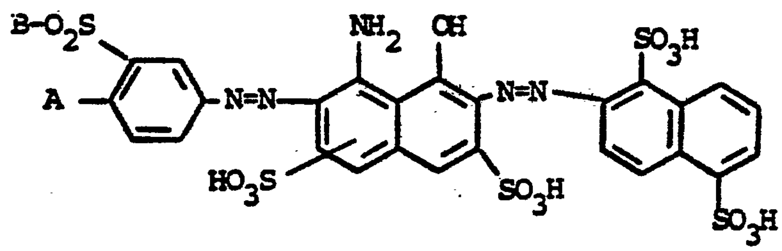

(5b)

5. Utilisation des colorants selon les revendications 1 à 4 pour teindre et imprimer des matières en fibres naturelles et synthétiques.

6. Matières en fibres naturelles ou synthétiques, teintes ou imprimées à l'aide des colorants selon les revendications 1 à 4.